# EUROPÄISCHE PATENTANMELDUNG

(11) **EP 3 418 793 A1**
(43) Veröffentlichungstag der Anmeldung: **26.12.2018**
(21) Anmeldenummer: 18176478.8
(22) Anmeldetag: 07.06.2018
(51) Int. Cl.: G02B 27/09, G02B 7/02, G02B 7/14

(54) **MODULARES OPTISCHES BAUKASTENSYSTEM FÜR KOLLIMIERTE TOP-HAT VERTEILUNG**

(30) Priorität: 23.06.2017 DE 102017113947
(71) Anmelder: asphericon GmbH, 07747 Jena (DE)
(72) Erfinder: Fuchs, Ulrike, 07745 Jena (DE); Kiontke, Sven, 07743 Jena (DE); Möhl, Anna, 07747 Jana (DE)
(74) Vertreter: Liedtke & Partner Patentanwälte

(57) **Zusammenfassung**

Die Erfindung betrifft ein Baukastensystem umfassend als optische Bauelemente (1, 10) mindestens einen Top-Hat Strahlformer (1) sowie mindestens einen Strahlaufweiter (10) zur beugungsbegrenzten Veränderung des Durchmessers eines zur optischen Achse (X) kollimierten Strahlenbündels monochromatischen Lichts der gleichen Wellenlänge. Der mindestens eine Top-Hat Strahlformer (1) ist zur Transformation von zur optischen Achse (X) kollimiertem Licht einer Wellenlänge und einer Eintrittsstrahldichteverteilung mit einem Gauß-Profil in zur optischen Achse (X) kollimiertes Licht einer Austrittsstrahldichteverteilung mit einem Top-Hat-Profil mit einer Plateau Homogentität von höchstens 0,133 und einer Kantensteilheit (Edge Steepness) von mindestens 0,4 eingerichtet. Die optischen Bauelemente (1, 10) sind jeweils in einem Gehäuse (2) gefasst, welches ein erstes und ein zweites Feingewinde (2.1, 2.3) aufweist. Das erste und zweite Feingewinde (2.1, 2.3) sind miteinander verschraubbar ausgebildet, wobei beim Verschrauben die optischen Achse verschraubter optischer Bauelemente (1, 10) innerhalb der beugungsbegrenzten Divergenz fluchten.

## Beschreibung

Die Erfindung betrifft ein optisches Baukastensystem zur Erzeugung von kollimierten Austrittsstrahlen, deren Strahldichte rotationssymmetrisch um die optische Achse verteilt ist, wobei die Strahldichte in einem kreisförmigen Innenbereich konstant ist und die Strahldichte in einem den kreisförmigen Innenbereich umgebenden Außenbereich Null ist. Eine derartige Strahldichteverteilung soll im Folgenden als Top-Hat-Profil bezeichnet werden.

Aus dem Stand der Technik sind Strahlformer bekannt, mit denen Bündel von kollimierten Eintrittsstrahlen, deren Verteilung in einer zur optischen Achse senkrechten Eintrittsebene durch eine Eintrittsstrahldichteverteilung bestimmt ist, in Bündel von kollimierten Austrittsstrahlen transformiert werden, deren Verteilung in einer zur optischen Achse senkrechten Austrittsebene durch eine Austrittsstrahldichteverteilung bestimmt ist. Auch sind Strahlformer bekannt, bei denen die Eintrittsstrahldichteverteilung durch ein rotationssymmetrisches Gaußprofil und die Austrittsstrahldichteverteilung durch ein Top-Hat-Profil bestimmt sind.

Ferner sind Faserkollimatoren bekannt, mit denen Licht, das aus der Austrittsfläche einer optischen Faser in einem Raumwinkelbereich divergent austritt, der von der numerischen Apertur der optischen Faser bestimmt wird, kollimiert wird.

Aus dem Stand der Technik sind ferner Strahlaufweiter bekannt, mit denen der Durchmesser eines kollimierten Strahlenbündels verändert werden kann.

Zudem sind Verfahren und Vorrichtungen bekannt, mit denen optische Bauelemente, beispielsweise Strahlformer, Faserkollimatoren und/oder Strahlaufweiter miteinander verbunden oder gegeneinander fixiert sowie optisch justiert werden können. Beispielsweise sind optische Bänke bekannt, die Aufhahmevorrichtungen zur Aufnahme optischer Bauelemente sowie Fixiervorrichtungen umfassen, mittels derer solche Aufnahmevorrichtungen gegeneinander fixierbar sind. Es sind auch Verfahren bekannt, mit denen optische Bauelemente mit Hilfe von Autokollimationsfernrohren zueinander zentriert und so ausgerichtet werden können, dass die optischen Achsen der einzelnen Bauelemente fluchten.

Aus dem Stand der Technik ist auch bekannt, wie spezifische, für die Transformation einer konkreten Eintrittsstrahlenverteilung in eine konkrete Austrittsstrahlenverteilung geeignete optische Bauelemente entworfen werden.

Der Erfindung liegt die Aufgabe zu Grunde, ein modulares optisches Baukastensystem anzugeben, das eine geringe Zahl von Bauelementtypen umfasst, die von einer bestimmten Eintrittsstrahlenverteilung und einer bestimmten Austrittsstrahlenverteilung unabhängig standardisiert bereitgestellt sind. Durch Kombination von Bauelementen gleicher und/oder verschiedener Bauelementtypen können optische Systeme gebildet werden, mit denen für eine große Zahl von Eintrittsstrahlenverteilungen eine Austrittsstrahlenverteilung mit einem Top-Hat-Profil erzeugbar ist. Ferner liegt der Erfindung die Aufgabe zu Grunde, ein solches modulares optisches Baukastensystem so anzugeben, dass optische Bauelemente gleicher und/oder unterschiedlicher Bauelementtypen leichter gegeneinander fixierbar und/oder optisch justierbar sind.

Die Aufgabe wird erfindungsgemäß gelöst durch ein modulares optisches Baukastensystem mit den Merkmalen des Anspruchs 1.

Vorteilhafte Ausgestaltungen der Erfindung sind Gegenstand der Unteransprüche.

Baukastensystem umfasst als gefasste optische Bauelemente mindestens einen Top-Hat Strahlformer, der zur beugungsbegrenzten Transformation von zur optischen Achse kollimiertem monochromatischem Licht einer Wellenlänge und einer Eintrittsstrahldichteverteilung mit einem Gauß-Profil in zur optischen Achse kollimiertes Licht einer Austrittsstrahldichteverteilung mit einem Top-Hat-Profil vorgesehen ist. Vorzugsweise ist der Top-Hat-Strahlformer als refraktives optisches Bauelement ausgebildet. Der Top-Hat-Strahlformer ist derart ausgebildet, dass die austrittsseitige Wellenfront in einem Arbeitsabstand von bis zu 400mm gemäß der Norm DIN EN ISO 13694:2016-08 "Optik und Photonik - Laser und Laseranlagen - Prüfverfahren für die Leistungs-(Energie-) dichteverteilung von Laserstrahlen" eine Plateau Homogenität von höchstens 0,133 sowie eine Kantensteilheit (Edge Steepness) von mindestens 0,4 aufweist.

Besonders bevorzugt ist der Top-Hat-Strahlformer für einen breiten Wellenlängenbereich von 350 Nanometern bis 2200 Nanometern vorgesehen. In vorteilhafter Weise kann ein solcher Top-Hat-Strahlformer justagefrei mit optischen Bauelementen des Baukastensystems kombiniert werden, die für unterschiedliche Wellenlängen vorgesehen sind. Ferner erlaubt ein solches Baukastensystem die Herstellung von Top-Hat-Strahlformern mit besonders kurzer Baulänge. Zudem ist es möglich, mit einer begrenzten Zahl optischer Bauelemente eine besonders große Vielfalt unterschiedlicher Top-Hat-Strahlformer herzustellen.

Das Baukastensystem umfasst ferner mindestens einen Strahlaufweiter zur beugungsbegrenzten Veränderung des Durchmessers eines zur optischen Achse kollimierten Strahlenbündels monochromatischen Lichts der gleichen Wellenlänge.

Die gefassten optischen Bauelemente sind jeweils in einem hülsenförmigen, koaxial zur optischen Achse angeordneten Gehäuse gefasst, wobei konzentrisch zur optischen Achse an einem ersten Ende des Gehäuses ein ringförmiger erster Anschlag und ein erstes Feingewinde sowie an einem gegenüberliegenden zweiten Ende des Gehäuses ein ringförmiger zweiter Anschlag und ein zweites Feingewinde angeordnet sind. Die Anschläge und die Feingewinde sind passend geformt und angeordnet, so dass das zweite Feingewinde eines ersten gefassten optischen Bauelements mit dem ersten Feingewinde eines zweiten optischen Bauelements bis in eine Anschlagposition verschraubbar ist, in welcher der zweite Anschlag des Gehäuses ersten optischen Bauelements den ersten Anschlag des Gehäuses des zweiten optischen Bauelements kontaktiert. In dieser Anschlagposition sind die verschraubten gefassten optischen Bauelemente so ausgerichtet, dass ihre optischen Achsen innerhalb der beugungsbegrenzten Divergenz fluchten.

In vorteilhafter Weise erlaubt die erfindungsgemäße Anordnung optischer Bauelemente in Gehäusen die Herstellung von optischen Baugruppen durch einfaches Verschrauben. Damit entfallen weitere aufwändige Justageschritte und es kann zuverlässig durch Kombination der gefassten optischen Bauelemente eine Vielzahl von optischen Baugruppen mit hochgenauer, beugungsbegrenzter optischer Wirkung hergestellt werden.

Ein weiterer Vorteil des Baukastensystems besteht darin, dass durch Verschrauben eines in einem erfindungsgemäßen Gehäuse gefassten Top-Hat-Strahlformers mit mindestens einem, auseintrittsseitig zum Top-Hat-Strahlformer angeordneten und ebenfalls in einem erfindungsgemäßen Gehäuse gefassten Strahlaufweiters die radiale Ausdehnung des Top-Hat-Profils leicht verändert werden kann. Beispielsweise ist es möglich, mittels eines nachgeordneten Strahlaufweiters die radiale Ausdehnung des Top-Hat-Profils um einen Faktor von 1,5 zu vergrößern. Durch Verwendung eines nachfolgend noch genauer beschriebenen Gewindeadapters ist es möglich, einen Strahlaufweiter austrittsseitig so anzuordnen, dass die radiale Ausdehnung des Top-Hat-Profils um einen Faktor von bis zu 6 verkleinert wird. In vorteilhafter Weise ist es somit möglich, den Durchmesser des austretenden Strahls an im Strahlengang nachgeordnete optische Elemente anzupassen, um beispielsweise die Effizienz der Linsenausnutzung zu verbessern oder die Baulänge des gesamten optischen Systems zu verringern.

Zudem kann der in einem erfindungsgemäßen Gehäuse gefasste Top-Hat-Strahlformer mit mindestens einem eintrittsseitig angeordneten Strahlaufweiter verschraubt werden. Dadurch ist es leicht möglich, den Durchmesser eines eintretenden Strahls mit Gaußprofil an den eintrittsseitigen optisch wirksamen Durchmesser des Top-Hat-Strahlformers anzupassen.

In einer Ausführungsform der Erfindung umfasst das Baukastensystem zusätzlich mindestens einen in einem Kollimatorgehäuse gefassten Faserkollimator mit einem Eintritt zur Einspeisung von monochromatischem Licht aus einer optischen Faser und einen Austritt zur Abgabe von längs der optischen Achse kollimiertem Licht. Der Faserkollimator ist für Licht der gleichen Wellenlänge vorgesehen wie der mindestens eine Top-Hat-Strahlformer und wie der mindestens eine Strahlaufweiter des Baukastensystems.

Konzentrisch zur optischen Achse sind am Austritt des Faserkollimators ein austrittsseitiger Anschlag und ein austrittsseitiges Feingewinde so angeordnet, dass das austrittsseitige Feingewinde des Faserkollimators mit dem ersten Feingewinde eines in einem Gehäuse gefassten zweiten optischen Bauelements bis in eine Anschlagposition verschraubbar ist, in welcher der austrittsseitige Anschlag des Faserkollimators den ersten Anschlag des zweiten optischen Bauelements kontaktiert und so ausrichtet, dass die optischen Achsen des Faserkollimators und des zweiten Bauelements innerhalb der beugungsbegrenzten Divergenz fluchten.

In vorteilhafter Weise erlaubt diese Ausführungsform die Einspeisung von Licht aus einer Laserquelle in eine aus verschraubten optischen Bauelementen gebildete optische Baugruppe ohne weitere Justierung.

Bei einer Ausführungsform der Erfindung ist der Faserkollimator justierbar ausgeführt. Die Kombination eines solchen justierbaren Faserkollimators mit einem gefassten Top-Hat-Strahlformer und optional mit einem oder mehreren gefassten Strahlformern ist vorteilhaft, da die Justage einer daraus gebildeten optischen Baugruppe besonders einfach ist.

Bei einer Ausführungsform der Erfindung weist ein erster Strahlaufweiter eine Vergrößerung von 1,5 auf, ein zweiter Strahlaufweiter eine Vergrößerung von 1,75 auf und ein dritter Strahlaufweiter eine Vergrößerung von 2,0 auf. Durch Verschrauben derartig abgestufter Strahlaufweiter lassen sich optische Baugruppen zur Strahlaufweitung über einen großen Bereich von Gesamtvergrößerungen und in feinen Abständen von Gesamtvergrößerungen ohne zusätzliche Justage herstellen.

Bei einer Ausführungsform der Erfindung umfasst das Baukastensystem mehrere Sätze von optischen Bauelementen, wobei ein Satz optischer Bauelemente für jeweils eine Wellenlänge eingespeisten monochromatischen Lichts vorgesehen ist. Dadurch ist die Bildung von optischen Baugruppen bei Erhalt der beugungsbegrenzten Abbildungsgenauigkeit auch für mehrere Wellenlängen mit einem Baukastensystem möglich.

Bei einer Ausführungsform der Erfindung umfasst das Baukastensystem zusätzlich umfassend mindestens einen Gewindeadapter mit einem jeweils konzentrisch und senkrecht zu einer Längsachse angeordneten ersten Anschlag und einem ersten Feingewinde sowie einem entlang der Längsachse gegenüberliegendem zweiten Anschlag und einem zweiten Feingewinde. Die Feingewinde des Gewindeadapters sind so geformt und angeordnet, dass sie mit einem Feingewinde eines Gehäuses eines gefassten optischen Bauelements bis in eine Anschlagposition verschraubbar sind, in welcher ein Anschlag des Gewindeadapters einen Anschlag des gefassten optischen Bauelements kontaktiert und so ausrichtet, dass die Längsachse des Gewindeadapters mit der optischen Achse des gefassten optischen Bauelements innerhalb der beugungsbegrenzten Divergenz des optischen Bauelements fluchtet.

Bei einer Ausführungsform eines Gewindeadapters sind dessen erstes und zweites Feingewinde sowie dessen erster und zweiter Anschlag passend zum ersten Feingewinde und passend zum ersten Anschlag eines erfindungsgemäßen Gehäuses geformt und angeordnet. Mittels einer solchen Ausführungsform eines Gewindeadapters ist es möglich, das erste Feingewinde eines ersten Gehäuses über den Gewindeadapter mit dem ersten Feingewinde eines zweiten Gehäuses zu verschrauben. So ist es beispielsweise möglich, das erste, üblicherweise eintrittsseitig angeordnete Feingewinde eines gefassten aufweitenden Strahlaufweiters entgegen der vorgesehenen Strahlrichtung über einen Gewindeadapter mit ersten Feingewinde eines gefassten Top-Hat-Strahlformers zu verschrauben, so dass der Strahlaufweiter in dieser verschraubten Anordnung am Eintritt des Top-Hat-Strahlformers strahlverengend wirkt.

Bei einer weiteren Ausführungsform eines Gewindeadapters sind dessen erstes und zweites Feingewinde sowie dessen erster und zweiter Anschlag passend zum zweiten Feingewinde und passend zum zweiten Anschlag eines erfindungsgemäßen Gehäuses geformt und angeordnet. Mittels einer solchen Ausführungsform eines Gewindeadapters ist es möglich, das zweite Feingewinde eines ersten Gehäuses über den Gewindeadapter mit dem zweiten Feingewinde eines zweiten Gehäuses zu verschrauben.

So ist es beispielsweise möglich, das zweite, üblicherweise austrittsseitig angeordnete Feingewinde eines gefassten aufweitenden Strahlaufweiters entgegen der vorgesehenen Strahlrichtung über einen Gewindeadapter mit zweiten Feingewinde eines gefassten Top-Hat-Strahlformers zu verschrauben, so dass der Strahlaufweiter in dieser verschraubten Anordnung am Austritt des Top-Hat-Strahlformers strahlverengend wirkt.

In vorteilhafter Weise kann somit über den Gewindeadapter die Zahl der mit einem Baukastensystem herstellbaren unterschiedlichen optischen Systeme vervielfacht werden.

Ausführungsbeispiele der Erfindung werden im Folgenden anhand der Zeichnungen näher erläutert.

Darin zeigen:
- Figur 1: schematisch den Strahlengang durch einen Top-Hat-Strahlformer,
- Figur 2: schematisch einen in einem Gehäuse gefassten Top-Hat-Strahlformer,
- Figur 3: schematisch den Strahlengang in einem Strahlaufweiter,
- Figur 4: schematisch einen in einem Gehäuse gefassten Strahlaufweiter,
- Figur 5: schematisch den Strahlengang in kaskadiert angeordneten Strahlaufweitern,
- Figur 6: schematisch einen in einem Gehäuse gefassten Faserkollimator,
- Figur 7: schematisch einen justierbaren Faserkollimator,
- Figur 8: schematisch einen Gewindeadapter sowie
- Figur 9: schematisch einen gefassten Top-Hat-Strahlformer mit einem verschraubten gefassten Strahlaufweiter.

Einander entsprechende Teile sind in allen Figuren mit den gleichen Bezugszeichen versehen.

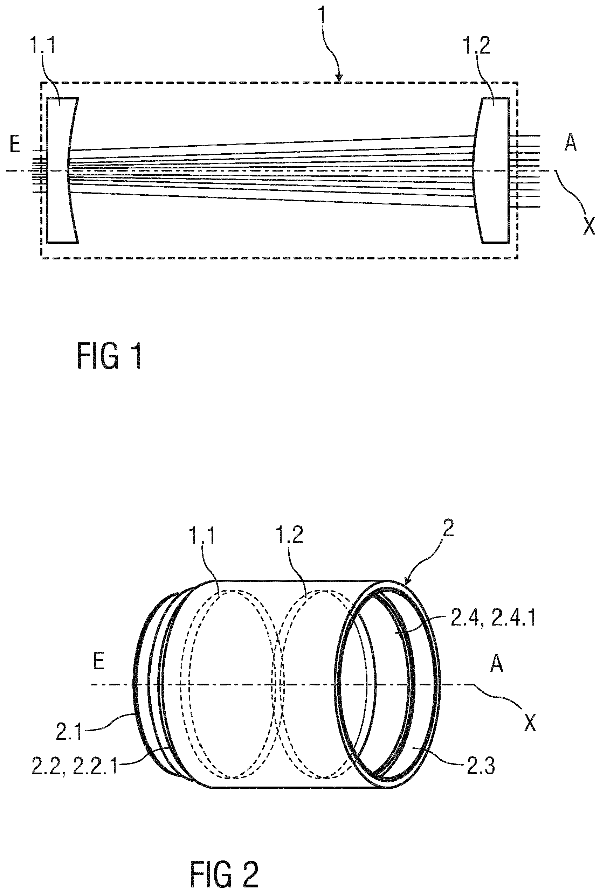

**Figur 1** zeigt schematisch den Strahlengang durch einen Top-Hat-Strahlformer 1 mit einem Eintritt E und einem Austritt A nach dem Stand der Technik. Eintrittsseitig ist eine erste Linse 1.1 angeordnet, die als plan-konkave Linse mit asphärischer konkaver Fläche geformt ist. Austrittsseitig ist eine zweite Linse 1.2 angeordnet, die als konvex-plane Linse mit asphärischer konvexer Fläche geformt ist. Die Linsen 1.1, 1.2 sind konzentrisch zur optischen Achse X angeordnet und so geformt, dass ein zur optischen Achse X kollimiertes Eintrittsstrahlenbündel ES mit einer in Abhängigkeit vom Abstand zur optischen Achse X nach einem Gaußprofil verteilten Strahldichte in ein Austrittsstrahlenbündel mit einem Top-Hat-Profil transformiert wird. Aus dem Stand der Technik sind Top-Hat-Strahlformer 1 zur Transformation eines Gaußprofils in ein Top-Hat-Profil mit einer Plateau Homogenität von höchstens 0,133 und einer Kantensteilheit (Edge Steepness) von mindestens 0,4 bekannt.

Figur 2 zeigt schematisch die Anordnung eines Top-Hat-Strahlformers 1, der in einem hülsenförmigen Gehäuse 2 zur Aufnahme der Linsen 1.1, 1.2 gefasst ist.

Das Gehäuse 2 weist ein eintrittsseitiges erstes Feingewinde 2.1, einen ringförmigen eintrittsseitigen ersten Anschlag 2.2, ein austrittsseitiges zweites Feingewinde 2.3 und einen ringförmigen austrittsseitigen zweiten Anschlag 2.4 auf. Das eintrittsseitige erste Feingewinde 2.1 ist als Außengewinde geformt, an dessen zum Eintritt E weisendem Ende der eintrittsseitige erste Anschlag 2.2 angeordnet ist. Das austrittsseitige zweite Feingewinde 2.3 ist als Innengewinde geformt, an dessen zum Eintritt E weisendem Ende der austrittsseitige zweite Anschlag 2.4 als radialer Vorsprung in der Innenfläche des Gehäuses 2 angeformt ist.

Die Feingewinde 2.1, 2.3, die Anschläge 2.2, 2.4 sowie das Gehäuse 2 sind koaxial zur optischen Achse X angeordnet. Die Anschläge 2.2, 2.4 weisen jeweils ringförmige Anschlagflächen 2.2.1, 2.4.1 auf, die senkrecht zur optischen Achse X angeordnet sind. Die Feingewinde 2.1, 2.3 und die Anschläge 2.2, 2.4 sind korrespondierend geformt und angeordnet, so dass ein erstes und ein zweites Gehäuse 2 dadurch miteinander verschraubbar sind, dass das erste Feingewinde 2.1 des ersten Gehäuses 2 in das zweite Feingewinde 2.3 des zweiten Gehäuses 2 verschraubbar ist oder das zweite Feingewinde 2.3 des ersten Gehäuses 2 in das erste Feingewinde 2.1 des zweiten Gehäuses 2 verschraubbar ist.

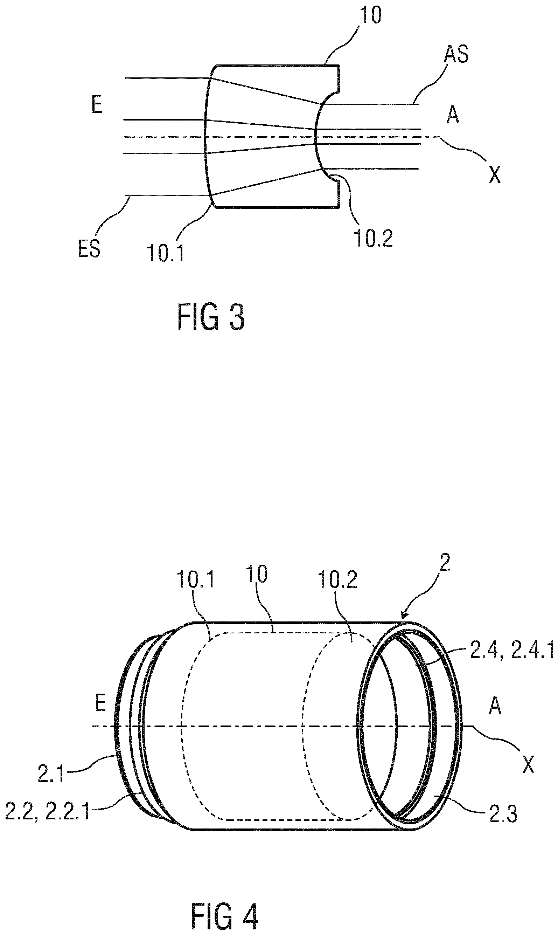

Figur 3 zeigt schematisch den Strahlengang in einem Strahlaufweiter 10, der als einstückiges optisches Element mit einer eintrittsseitigen ersten optischen Fläche 10.1 und einer austrittsseitigen zweiten optischen Fläche 10.2 ausgeführt ist. Der Strahlaufweiter 10 bewirkt, dass ein Eintrittsstrahlenbündel ES in ein Austrittsstrahlenbündel AS transformiert wird. Das Austrittsstrahlenbündel AS weist einen gegenüber dem Eintrittsstrahlenbündel ES veränderten Durchmesser auf, aber die gleiche, auf diesen geänderten Durchmesser skalierte Strahldichteverteilung auf. Beugungsbegrenzte Strahlaufweiter 10, bei denen die optischen Flächen 10.1, 10.2 als asphärische Flächen ausgeführt sind, sind aus dem Stand der Technik bekannt.

Figur 4 zeigt schematisch die Anordnung eines gefassten Strahlaufweiters in einem hülsenförmigen Gehäuse 2 zur Aufnahme des einstückigen optischen Elements mit den optischen Flächen 10.1, 10.2.

Das Gehäuse 2 gleicht dem in Figur 2 beschriebenen Gehäuse. Insbesondere weist es gleichartig geformte und angeordnete Feingewinde 2.1, 2.3 und Anschläge 2.2, 2.4 auf.

Somit sind jeweils in Gehäusen 2 angeordnete gefasste Top-Hat-Strahlformer 1 und gefasste Strahlaufweiter 10 miteinander verschraubbar, wobei das austrittsseitige zweite Feingewinde 2.3 des Top-Hat-Strahlformers 1 in das eintrittsseitige erste Feingewinde 2.1 des Strahlaufweiter 10 verschraubbar ist.

Dabei sind zwei Gehäuse 2 so weit verschraubbar, bis die Anschlagflächen 2.2.1, 2.4.1 der Anschläge 2.2, 2.4 in einer Anschlagposition gegeneinander gepresst sind. Die Feingewinde 2.1, 2.3 sowie die Anschlagflächen 2.2.1, 2.4.1 sind so genau gefertigt und die optischen Elemente 1.1, 1.2, 10.1, 10.2 sind in den Gehäusen 2 so genau angeordnet, dass die optischen Achsen X eines in jeweils einem Gehäuse 2 angeordneten gefassten Top-Hat-Strahlformers 1 und eines gefassten Strahlaufweiters 10 innerhalb der durch Beugungsbegrenzung bestimmten Toleranz fluchten. Mit anderen Worten: beim Verschrauben eines in je einem Gehäuse 2 gefassten Top-Hat-Strahlformers 1 und eines Strahlaufweiters 10 bis zur Anschlagposition entsteht eine optische Baugruppe, bei der die Genauigkeit der optischen Funktion durch Beugung begrenzt ist.

Die erfindungsgemäße Gestaltung der Gehäuse 2 ermöglicht die Verschraubung eines gefassten Top-Hat-Strahlformers 1 mit einem oder mit zwei gefassten Strahlaufweitern 10, so dass durch eintrittsseitige und/oder austrittsseitige Veränderung des Strahldurchmessers ein solcher Top-Hat-Strahlformer 1 flexibel in verschiedenen optischen Aufbauten eingesetzt werden kann. Insbesondere ist es ein Vorteil der Erfindung, dass dabei keine weitere Justierung des Top-Hat-Strahlformers 1 relativ zu dem mindestens einen Strahlaufweiter 10 erforderlich ist.

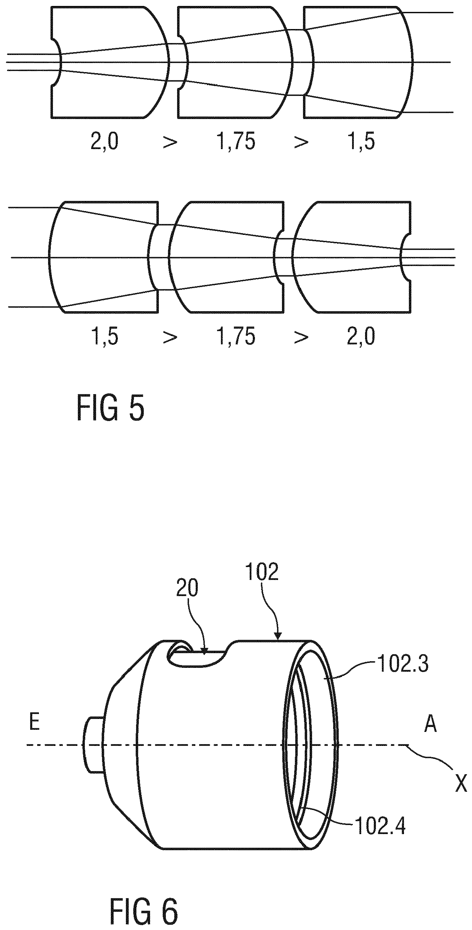

Strahlaufweiter 10 können, wie in Figur 5 gezeigt, auch kaskadiert angeordnet werden, um eine größere Veränderung des Strahldurchmessers zu erzielen. In vorteilhafter Weise lassen sich in Gehäusen 2 gefasste Strahlaufweiter 10 dazu ohne weitere Justage verschrauben. In einer Ausführungsform der Erfindung sind die Feingewinde 2.1, 2.3 sowie die Anschlagflächen 2.2.1, 2.4.1 so genau gefertigt und die optischen Elemente 1.1, 1.2, 10.1, 10.2 in den Gehäusen 2 so genau angeordnet, dass die optischen Achsen X einer vorbestimmten Anzahl von kaskadierten gefassten Strahlaufweiter 10 innerhalb der durch Beugungsbegrenzung bestimmten Toleranz fluchten. Mit anderen Worten: beim Verschrauben einer vorbestimmten Anzahl von in je einem Gehäuse 2 gefassten Strahlaufweitern 10 entsteht eine optische Baugruppe mit einer Vergrößerung, die sich als Produkt aus den Vergrößerungen der einzelnen verschraubten Strahlaufweiter 10 ergibt und bei der die Genauigkeit der optischen Funktion durch Beugung begrenzt ist. In vorteilhafter Weise lassen sich so mit einer begrenzten Zahl von einzelnen gefassten Strahlaufweitern 10 durch Verschrauben Strahlaufweiter als optische Baugruppen herstellen, deren Vergrößerung über einen großen Bereich in sehr feiner Abstufung wählbar ist.

Bei einer Ausführungsform der Erfindung weisen Strahlaufweiter 10 eine Vergrößerung von 2,0, 1,75 oder 1,5 auf und werden so verschraubt, dass der Strahlaufweiter 10 mit der größten Vergrößerung an der Stelle mit dem kleinsten Strahldurchmesser angeordnet wird.

Figur 6 zeigt als weiteres optisches Bauelement schematisch einen in einem Gehäuse 102 gefassten Faserkollimator 20 mit einer eintrittsseitigen Faseraufnahme 20.4 zur Aufnahme einer optischen Faser. Der Faserkollimator 20 bewirkt, dass von der optischen Faser austretendes Licht in ein zur optischen Achse X kollimiertes Austrittsstrahlenbündel AS kollimiert wird. Faserkollimatoren 20 mit optischen Elementen, die mindestens teilweise asphärisch geformt sind und beugungsbegrenzt kollimierte Austrittsstrahlenbündel AS erzeugen, sind aus dem Stand der Technik bekannt.

Erfindungsgemäß ist der Faserkollimator 20 mit einem Kollimatorgehäuse 102 versehen, das ein austrittsseitiges Feingewinde 102.3 und einen austrittsseitigen Anschlag 102.4 aufweist, die passend zur einem eintrittsseitigen ersten Feingewinde 2.1 und einem eintrittsseitigen ersten Anschlag 2.2 des in Figur 2 beschriebenen Gehäuses 2 geformt und angeordnet sind. Somit kann der Faserkollimator 20 ebenfalls justagefrei mit einem gefassten Top-Hat-Strahlformer 1 verschraubt werden. Optional können einer oder mehrere gefasste Strahlaufweiter 10 zwischen den gefassten Faserkollimator 20 und den gefassten Top-Hat-Strahlformer 1 geschraubt werden.

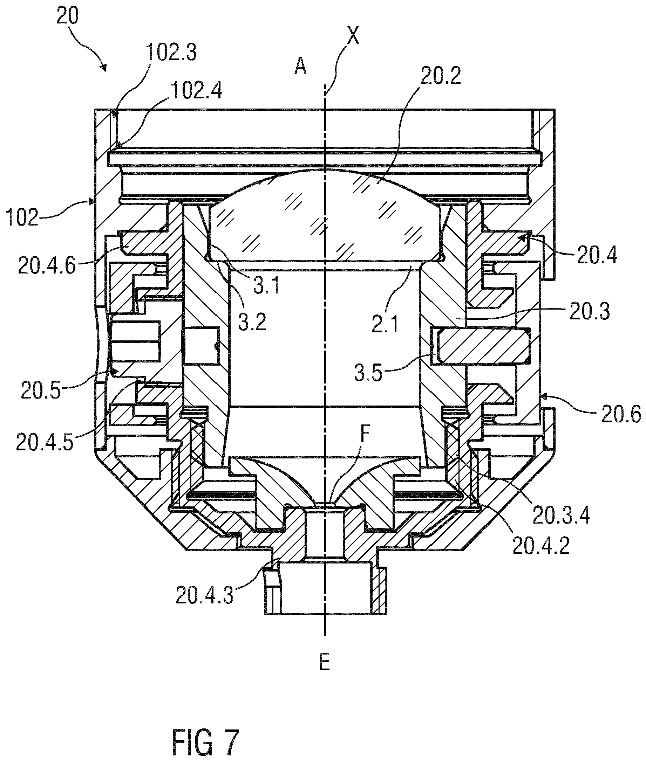

In einem Ausführungsbeispiel ist der Faserkollimator 20 als justierbarer Faserkollimator ausgebildet, der in der deutschen Patentanmeldung DE 10 2017 205 590.1 näher beschrieben und in Figur 7 dargestellt ist. Der justierbare Faserkollimator 20 weist einen Eintritt E zur Einspeisung von Licht aus einer optischen Faser und einem Austritt A zur Abgabe von entlang der optischen Achse X kollimiertem Licht auf. Ein solcher justierbarer Faserkollimator umfasst ein Kollimatorgehäuse 102, in dem eine Sammellinse 20.2 gefasst ist, deren Brennpunkt F eingangsseitig auf der optischen Achse X liegt. Das Kollimatorgehäuse 102 weist ein austrittsseitiges Feingewinde 102.3 sowie einen austrittsseitigen Anschlag 102.4 auf.

Der justierbare Faserkollimator 20 umfasst ferner eine Fassung 20.3 mit einem Feingewinde 20.3.4 sowie eine die Fassung 20.3 konzentrisch aufnehmende hülsenförmige Faseraufnahme 20.4 mit einer Faserkupplung 20.4.3 zur Aufnahme der optischen Faser, mit einem radial nach außen auskragenden Fixieranschlag 20.4.6, mit einer Exzenteraufnahme 20.4.5 zur drehbaren Aufnahme einer exzentrischen Fixierschraube 20.5 im Hülsenmantel und mit einem auf der Innenseite des Hülsenmantels angeordneten Feingewinde 20.4.2, das im Feingewinde 20.3.4 der Fassung 20.3 geführt ist und das eine Drehbewegung um die optische Achse in eine Längsverschiebung der Faseraufnahme 20.4 entlang der optischen Achse relativ zur Fassung 20.3 umsetzt.

Ein justierbarer Faserkollimator 20 umfasst ferner eine die Faseraufhahme 20.4 ringförmig umschließende und hierzu drehbewegliche sowie zur Fassung 20.3 drehfeste Justageschale 20.6. Die Justageschale 20.6 umfasst eine gegen die Fassung 20.3 längsbewegliche Fixierhalbschale 20.6.2, die einen entlang des Umfangs ausgenommenen Fixierschlitz 20.6.2.2 zur Aufnahme des Schraubenkopfes 20.5.2 der Fixierschraube 20.5 aufweist. Die Justageschale 20.6 ist mittels der Fixierschraube 20.5 in einer Fixierposition haftreibend gegen den Fixieranschlag 20.4.6 gepresst und in einer Löseposition von diesem gelöst.

Die Kombination eines solchen justierbaren Faserkollimators 20 mit einem gefassten Top-Hat-Strahlformer 1 und optional mit einem oder mehreren gefassten Strahlformern 10 ist vorteilhaft, da die Justage einer daraus gebildeten optischen Baugruppe besonders einfach ist.

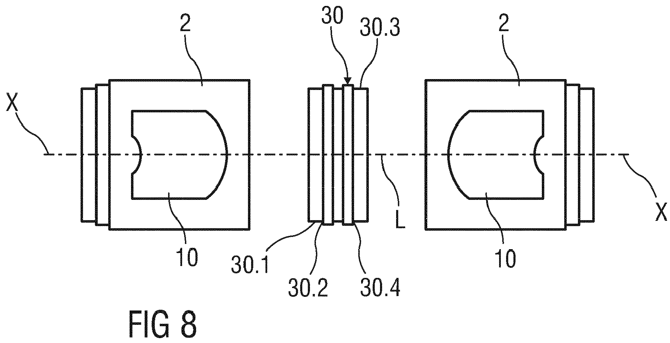

Figur 8 zeigt einen Gewindeadapter 30 für den Übergang von einem Innengewinde auf ein Außengewinde. Der Gewindeadapter 30 ist hülsenförmig entlang einer Längsachse L erstreckt geformt und weist an einem Ende ein als Außengewinde ausgebildetes erstes Feingewinde 30.1 und einen ersten Anschlag 30.2 auf. Am gegenüberliegenden Ende weist der Gewindeadapter 30 ein ebenfalls als Außengewinde ausgebildetes zweites Feingewinde 30.3 und einen zweiten Anschlag 30.4 auf. Die Feingewinde 30.1, 30.3 und die Anschläge 30.2, 30.4 sind passend zu dem als Innengewinde ausgebildeten zweiten Feingewinde 2.3, 102.3 und zu dem zweiten Anschlag 2.4, 102.4 eines Gehäuses 2, 102 geformt und angeordnet, so dass das jeweils ein Feingewinde 30.1, 30.3 des Gewindeadapters 30 mit dem zweiten Feingewinde 2.3, 102.3 jeweils eines ersten Gehäuses 2, 102 und eines zweiten Gehäuses 2 bis in eine Anschlagposition verschraubbar sind. In dieser Anschlagposition fluchtet die Längsachse L des Gewindeadapters 30 mit den optischen Achsen X der im ersten und im zweiten Gehäuse 2 gefassten optischen Bauelemente, welche beispielhaft als Strahlaufweiter 10 ausgeführt sind.

In analoger Weise können die Feingewinde 30.1, 30.3 als Innengewinde passend zum als Außengewinde ausgebildeten ersten Feingewinde 2.1 und die Anschläge 30.2, 30.4 korrespondierend zum ersten Anschlag eines Gehäuses 2 ausgeführt sein.

Der Gewindeadapter 30 erweitert die Zahl mit dem Baukastensystem herstellbarer optischer Baugruppen dadurch, dass durch Verschrauben des Gewindeadapters 30 mit einem in einem Gehäuse 2 gefassten optischen Bauelement dessen Strahlrichtung umgekehrt werden kann.

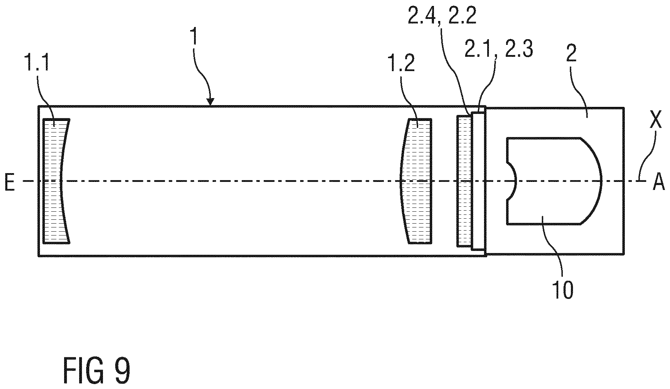

Figur 9 zeigt einen Top-Hat-Strahlformer 1 mit austrittsseitig verschraubtem Strahlaufweiter 10, wobei das erste Feingewinde 2.1 des gefassten Strahlaufweiters 10 mit dem zweiten Feingewinde 2.3 des gefassten Top-Hat-Strahlformers 1 verschraubt ist. Der erste, eintrittsseitig angeordnete Anschlag 2.2 des Strahlaufweiters 10 kontaktiert den zweiten, austrittsseitig angeordneten Anschlag 2.4 des gefassten Top-Hat-Strahlformers. Dadurch werden die optischen Achsen X des Strahlaufweiters 10 und des Top-Hat-Strahlformers 1 innerhalb der beugungsbegrenzten Divergenz fluchtend ausgerichtet.

Ein Vorteil des erfindungsgemäßen Baukastensystems besteht darin, dass mit einer begrenzten Anzahl von optischen Bauelementen 1, 10 eine große Vielfalt von Baugruppen mit verschiedener optischer Wirkung herstellbar ist, wobei die beugungsbegrenzte hohe optische Qualität der einzelnen optischen Bauelemente 1, 10 erhalten bleibt. Beispielsweise ist es in einer Ausführungsform der Erfindung möglich, austrittsseitig weitere Strahlaufweiter 10 anzuschrauben oder durch Verwendung eines Gewindeadapters 30 wie beschrieben die Strahlrichtung innerhalb eines Strahlaufweiters 10 umzukehren und somit die radiale Ausdehnung eines Top-Hat-Profils zu verkleinern.

### BEZUGSZEICHENLISTE

- 1: Top-Hat-Strahlformer, optisches Bauelement
- 1.1: erste Linse
- 1.2: zweite Linse
- 2: Gehäuse
- 2.1, 2.3: erstes, zweites Feingewinde
- 2.2, 2.4: erster, zweiter Anschlag
- 2.2.1, 2.4.1: Anschlagfläche
- 10: Strahlaufweiter, optisches Bauelement
- 10.1, 10.2: erste, zweite optische Fläche
- 20: Faserkollimator, optisches Bauelement
- 20.2: Sammellinse
- 20.3: Fassung
- 20.3.4: Feingewinde
- 20.4: Faseraufhahme
- 20.4.2: Feingewinde
- 20.4.3: Faserkupplung
- 20.4.5: Exzenteraufnahme
- 20.4.6: Fixieranschlag
- 20.5: Fixierschraube
- 20.5.2: Schraubenkopf
- 20.6: Justageschale
- 20.6.2: längsbewegliche Fixierhalbschale
- 20.6.2.2: Fixierschlitz
- 102: Kollimatorgehäuse
- 30: Gewindeadapter
- 30.1, 30.3: erstes, zweites Feingewinde
- 30.2, 30.4: erster, zweiter Anschlag
- 102.3: austrittsseitiges Feingewinde
- 102.4: austrittsseitiger Anschlag
- A: Austritt
- AS: Austrittsstrahlenbündel
- E: Eintritt
- ES: Eintrittsstrahlenbündel
- F: Brennpunkt
- L: Längsachse
- X: optische Achse

## Patentansprüche

1. Baukastensystem umfassend als optische Bauelemente (1, 10)
- mindestens einen Top-Hat Strahlformer (1) zur Transformation von zur optischen Achse (X) kollimiertem Licht einer Wellenlänge und einer Eintrittsstrahldichteverteilung mit einem Gauß-Profil in zur optischen Achse (X) kollimiertes Licht einer Austrittsstrahldichteverteilung mit einem Top-Hat-Profil mit einer Plateau Homogenität von höchstens 0,133 und einer Kantensteilheit (Edge Steepness) von mindestens 0,4 und
- mindestens einen Strahlaufweiter (10) zur beugungsbegrenzten Veränderung des Durchmessers eines zur optischen Achse (X) kollimierten Strahlenbündels monochromatischen Lichts der gleichen Wellenlänge,
welche jeweils in einem hülsenförmigen, koaxial zur optischen Achse (X) angeordneten Gehäuse (2) gefasst sind, wobei konzentrisch zur optischen Achse (X) an einem ersten Ende des Gehäuses (2) ein ringförmiger erster Anschlag (2.2) und ein erstes Feingewinde (2.1) sowie an einem zweiten Ende des Gehäuses (2) ein ringförmiger zweiter Anschlag (2.4) und ein zweites Feingewinde (2.3) so geformt und angeordnet sind, dass das zweite Feingewinde (2.3) eines ersten gefassten optischen Bauelements (1, 10) mit dem ersten Feingewinde (2.1) eines zweiten optischen Bauelements (1, 10) bis in eine Anschlagposition verschraubbar ist, in welcher der zweite Anschlag (2.4) des Gehäuses (2) ersten optischen Bauelements (1, 10) den ersten Anschlag (2.2) des Gehäuses (2) des zweiten optischen Bauelements (1, 10) kontaktiert und so ausrichtet, dass die optischen Achsen (X) des ersten und des zweiten optischen Bauelements (1, 10) innerhalb der beugungsbegrenzten Divergenz fluchten.

2. Baukastensystem nach Anspruch 1, **dadurch gekennzeichnet, dass** das Baukastensystem mindestens zwei für eine kaskadierte Anordnung eingerichtete Strahlaufweiter (10) umfasst.

3. Baukastensystem nach Anspruch 1 oder 2, zusätzlich umfassend als optisches Bauelement mindestens einen in einem Kollimatorgehäuse (102) gefassten Faserkollimator (20) mit einem Eintritt (E) zur Einspeisung von monochromatischem Licht der gleichen Wellenlänge aus einer optischen Faser und einem Austritt (A) zur Abgabe von längs der optischen Achse (X) kollimiertem Licht, wobei konzentrisch zur optischen Achse am Austritt (A) des Faserkollimators (20) ein austrittsseitiger Anschlag (102.4) und ein austrittsseitiges Feingewinde (102.3) so angeordnet sind, dass das austrittsseitige Feingewinde (102.3) des Faserkollimators (20) mit dem ersten Feingewinde (2.1) eines in einem Gehäuse (2) gefassten zweiten optischen Bauelements (1, 10) bis in eine Anschlagposition verschraubbar ist, in welcher der austrittsseitige Anschlag (102.4) des Faserkollimators (20) den ersten Anschlag (2.2) des zweiten optischen Bauelements (1, 10) kontaktiert und so ausrichtet, dass die optischen Achsen (X) des Faserkollimators (20) und des zweiten Bauelements (1, 10) innerhalb der beugungsbegrenzten Divergenz fluchten.

4. Baukastensystem nach einem der vorhergehenden Ansprüche, **dadurch gekennzeichnet, dass** ein erster Strahlaufweiter (10) eine Vergrößerung von 1,5, ein zweiter Strahlaufweiter (10) eine Vergrößerung von 1,75 und ein dritter Strahlaufweiter (10) eine Vergrößerung von 2,0 aufweist.

5. Baukastensystem nach einem der vorhergehenden Ansprüche umfassend mehrere Sätze von optischen Bauelementen (1, 10, 20), wobei ein Satz optischer Bauelemente (1, 10, 20) für jeweils eine Wellenlänge eingespeisten monochromatischen Lichts vorgesehen ist.

6. Baukastensystem nach einem der vorhergehenden Ansprüche, zusätzlich umfassend mindestens einen Gewindeadapter (30) mit einem jeweils konzentrisch und senkrecht zu einer Längsachse (L) angeordneten ersten Anschlag (30.2) und einem ersten Feingewinde (30.1) sowie einem entlang der Längsachse (L) gegenüberliegendem zweiten Anschlag (30.4) und einem zweiten Feingewinde (30.3), wobei die Feingewinde (30.1, 30.3) des Gewindeadapters (30) mit einem Feingewinde (2.1, 2.3) eines Gehäuses (2) eines gefassten optischen Bauelements (1, 10) bis in eine Anschlagposition verschraubbar sind, in welcher ein Anschlag (30.2, 30.4) des Gewindeadapters (30) einen Anschlag (2.2, 2.4) des gefassten optischen Bauelements (1, 10) kontaktiert und so ausrichtet, dass die Längsachse (L) des Gewindeadapters (30) mit der optischen Achse (X) des gefassten optischen Bauelements (1, 10) innerhalb der beugungsbegrenzten Divergenz des optischen Bauelements (1, 10) fluchtet.
